# EUROPÄISCHE PATENTANMELDUNG

(11) **EP 1 873 344 A1**
(43) Veröffentlichungstag der Anmeldung: **02.01.2008**
(21) Anmeldenummer: 06116466.1
(22) Anmeldetag: 30.06.2006
(51) Int. Cl.: E06B 3/56

(54) **Mittels Silikon agedichtete Verklebung**

(71) Anmelder: Sika Technology AG, 6340 Baar (CH)
(72) Erfinder: Bankwitz, Uwe, 8162, Steinmaur (CH); Müller, Ulli, 8954, Geroldswil (CH)
(74) Vertreter: Mäder, Annette

(57) **Zusammenfassung**

Die vorliegende Erfindung betrifft einen Klebverbund (6) zur Befestigung einer metallischen Halterung (3) an einer Scheibe (4), wobei die Halterung (3) und die Scheibe (4) über einen (Meth)acrylatklebstoff (1), welcher vollständig von einem Silicondichtstoff (2) ummantelt ist, miteinander verklebt sind.

## Beschreibung

### Technisches Gebiet

Die vorliegende Erfindung betrifft das Gebiet der Scheibenverklebung. Die Erfindung betrifft einen Klebverbund zur Befestigung einer metallischen Halterung an einer Scheibe, wobei die Halterung und die Scheibe über einen (Meth)acrylatklebstoff, welcher vollständig von einem Silicondichtstoff ummantelt ist, miteinander verklebt sind.

### Stand der Technik

Metallische Halterungen zur Befestigung von Scheiben, insbesondere von Glasscheiben, an Bauteilen, beispielsweise an Fassaden, sind bekannt. So werden beispielsweise Klemmhalter verwendet, in welche die Scheibe klammerartig befestigt wird. Nachteilig ist, dass aus ästhetischen Gründen aussenliegende Bauteile unerwünscht sind und dass aufgrund der mechanischen Befestigungsart ein grosses Risiko für das Auftreten von Glasbruch besteht. Andererseits werden auch punktförmige Halterungen verwendet, wobei die Scheibe durchbohrt wird und der entsprechende Punkthalter mechanisch an der Scheibe festgeschraubt wird. Insbesondere in Systemen mit durchbohrtem Isolierglas ist es notwendig, im Bereich der Bohrungen innerhalb der beabstandeten Glasscheiben diese hermetisch zu dem sie umgebenden geschlossenen Zwischenraum abzuschliessen. Es liegt daher eine sehr teuere und in Bezug auf Langzeitstabilität sehr kritische Verbindung vor.

Alle mechanisch befestigten Systeme bergen in sich die Gefahr von Glasbruch, sind sehr aufwendig herzustellen und sind deshalb teuer.

Allenfalls können die Halterungen zusätzlich zum Klemmhalter oder zum System mit durchbohrtem Glas mit der Scheibe verklebt werden.

DE 199 39 172 A1 beschreibt einen punktförmigen Halter, welcher durch einen Klebstoff kraft- und formschlüssig an eine Isolierglasscheibe angebracht wird. Damit das Gewicht der Isolierglasscheibe auch durch die beide beabstandeten Scheiben sicher durch die punktförmige Halterung aufgenommen werden kann, befindet sich allerdings in dem Luftzwischenraum zwischen den beabstandeten Glasscheiben ein Distanzstück. Durch die Position der Distanzstücke zwischen den beiden Scheiben sind die Lagen der an der Scheibe anzubringenden Punkthalter festgelegt.

Im Falle von geklebten Punkthaltern kommen aufgrund ihrer UV-Beständigkeit heute meist zwei Technologien zur Anwendung, Silicondichtstoffe, sowie Acrylatklebstoffe. Silicondichtstoffe sind bekannt für ihre Witterungs-, UV- und Temperaturbeständigkeit und werden deshalb seit vielen Jahren für das Kleben von Glas im Bauwesen erfolgreich eingesetzt. Der Nachteil der Silicondichtstoffe ist ihre im Vergleich zu anderen Klebstoffen geringere mechanische Festigkeit. Dies führt im Falle des Klebens von Punkthaltern dazu, dass die Klebeflächen, d. h. die Grösse der Punkthalter zur Abtragung aller Lasten oft so dimensioniert werden müssen, dass es weder ökonomisch noch ästhetisch sinnvoll ist. Acrylatklebstoffe weisen eine höhere Festigkeit als Silicondichtstoffe auf und sind daher besser geeignet, auch grosse Lasten aufzunehmen. Jedoch ist ihre Witterungsbeständigkeit nicht ausreichend, so dass ihr Einsatz insbesondere im Fassadenbau aufgrund der heutzutage erwarteten langen Nutzungsdauer der Gebäude nicht möglich ist.

### Darstellung der Erfindung

Aufgabe der vorliegenden Erfindung ist es daher, eine geklebte Halterung zur Verfügung zu stellen, welche die Nachteile des Standes der Technik überwindet. Überraschenderweise wurde gefunden, dass ein Klebverbund gemäss Anspruch 1 diese Aufgabe löst.

Derartige Klebverbunde zeichnen sich aus durch hohe Festigkeit und sehr gute Witterungsbeständigkeit. Überraschenderweise konnte gefunden werden, dass dieser Effekt durch die Verwendung einer spezifischen Kombination von Acrylatklebstoffen und Silicondichtstoffen erreicht werden kann.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: einen Teillängsschnitt durch den Klebverbund;
- Fig. 2: einen Querschnitt durch die Verklebung

Es sind nur die für das unmittelbare Verständnis der Erfindung wesentlichen Elemente gezeigt. Nicht dargestellt ist beispielsweise die Befestigung der metallischen Halterung an einer Tragkonstruktion.

### Weg zur Ausführung der Erfindung

Die vorliegende Erfindung betrifft einen Klebverbund umfassend eine metallische Halterung, eine Scheibe und eine Klebstoffanordnung, wobei die Klebstoffanordnung einen (Meth)acrylatklebstoff umfasst, welcher vollständig von einem Silicondichtstoff ummantelt ist. Die vorliegende Erfindung betrifft daher einen Klebverbund umfassend eine metallische Halterung und eine Scheibe, dadurch gekennzeichnet, dass die Halterung und die Scheibe über einen (Meth)acrylatklebstoff miteinander verklebt sind, und wobei der (Meth)acrylatklebstoff vollständig von einem Silicondichtstoff ummantelt ist. Vorzugsweise ist der Silicondichtstoff zwischen der metallischen Halterung und der Scheibe angeordnet. Er kann aber auch ganz oder zumindest teilweise ausserhalb der metallischen Halterung angeordnet sein. Wesentlich ist, dass der Silicondichtstoff den (Meth)acrylatklebstoff vollständig ummantelt. Dies ermöglicht, dass der (Meth)acrylatklebstoff nicht mit der Umgebungsluft in Kontakt kommt und nicht der Witterung ausgesetzt ist. Die Anordnung des Klebstoffs im Klebverbund ermöglicht eine Beständigkeit der Haftung des (Meth)acrylatklebstoffs gegen Umgebungseinflüsse, insbesondere gegen Feuchtigkeit.

Unter "vollständig ummanteln" wird im ganzen vorliegenden Dokument verstanden, dass der Silicondichtstoff den (Meth)acrylatklebstoff, welcher zwischen der Scheibe und der metallischen Halterung angebracht ist, gegen die Umgebung abdichtet, so dass der (Meth)acrylatklebstoff nicht mit Umgebungseinflüssen, wie beispielsweise Luftfeuchtigkeit, in Kontakt kommt. Das heisst, dass der (Meth)acrylatklebstoff einerseits mit der Scheibe und der metallischen Halterung in direktem Kontakt ist, und andererseits an den Stellen, an welchen der (Meth)acrylatklebstoff weder die Scheibe noch die metallische Halterung kontaktiert, mit dem Silicondichtstoff in Kontakt ist. Zwischen der Scheibe und dem (Meth)acrylatklebstoff sowie zwischen der metallischen Halterung und dem (Meth)acrylatklebstoff befindet sich, zumindest bereichsweise, kein Silicondichtstoff.

In einer Ausführungsform ist der Silicondichtstoff mit dem (Meth)acrylatklebstoff in direktem Kontakt. In einer anderen Ausführungsform berührt der Silicondichtstoff den (Meth)acrylatklebstoff nicht, sondern es besteht ein Abstand zwischen dem Silicondichtstoff und dem (Meth)acrylatklebstoff. Der Abstand kann beispielsweise mit Luft ausgefüllt sein. Vorzugsweise ist der Silicondichtstoff mit dem (Meth)acrylatklebstoff in direktem Kontakt.

Unter "metallischen Halterung" wird im ganzen vorliegenden Dokument eine Halterung verstanden, welche geeignet ist, eine Platte, vorzugsweise eine Scheibe, an einer Tragkonstruktion, beispielsweise an einer Fassade, zu befestigen, indem die metallische Halterung mit der Scheibenoberfläche verklebt wird. Die metallische Halterung weist vorzugsweise eine plane, d.h. eine flache oder gewölbte Oberfläche auf, welche als Montagefläche dient, welche durch einen Klebstoff form- und kraftschlüssig an eine Scheibe angebracht werden kann. Die Montagefläche weist vorzugsweise dieselbe Oberflächenform auf wie die Scheibe, mit der die metallische Halterung verklebt wird. Die metallische Halterung kann im Kontaktbereich zur Scheibe punktförmig, oval oder eckig, insbesondere rechteckig oder drei-, vier, oder fünfeckig oder trapezförmig, sein oder eine andere Form aufweisen, welche zur Verklebung zwischen der metallischen Halterung und einer Scheibe geeignet ist. Nicht als "metallische Halterung" im Sinne der vorliegenden Erfindung wird ein Rahmen, wie beispielsweise ein Fenster- oder Türrahmen, verstanden, welcher eine Scheibe, insbesondere eine Isolierglasscheibe, stirnseitig zumindest teilweise umgibt.

Die metallische Halterung ist bevorzugt eine punktförmige Halterung. Als Verbindung zwischen der punktförmigen Halterung und der Tragkonstruktion können die üblicherweise im Glasbau verwendeten Systeme, beispielsweise Punkthalter der Firma DORMA, eingesetzt werden. Für die metallische Halterung sind als Metalle insbesondere die Metalle und Legierungen von Eisen, Aluminium, Kupfer, Chrom und Nickel bevorzugt. Als besonders bevorzugt sind Stahl und Aluminium sowie dessen Legierungen. Besonders bevorzugt ist Edelstahl.

Der Querschnitt durch die Kleb- und Dichtstoffanordnung parallel zur Scheibenoberfläche hat vorzugsweise dieselbe Form wie der Querschnitt durch die Oberfläche der metallischen Halterung. Bei einer punktförmigen Halterung ist der Querschnitt des Kleb- und Dichtstoffs parallel zur Scheibenoberfläche vorzugsweise im Wesentlichen kreisförmig. In dieser Ausführungsform bildet der Silicondichtstoff, welcher den (Meth)acrylatklebstoff vollständig ummantelt, einen Ring um den (Meth)acrylatklebstoff. Der Silicondichtstoff wird vorzugsweise in einer Stärke, d.h. einer Breite, zwischen 0.1 und 20 mm, bevorzugt zwischen 0.2 und 10 mm, noch mehr bevorzugt zwischen 0.5 und 2 mm um den (Meth)acrylatklebstoff angeordnet.

Die Oberfläche der metallischen Halterung ist vorzugsweise coplanar zur Oberfläche der Scheibe angeordnet, d.h. der Abstand zwischen der metallischen Halterung und der Scheibe ist im Wesentlichen überall gleich. Vorzugsweise beträgt der Abstand zwischen der metallischen Halterung und der Scheibe, und somit auch die Dicke der Klebstoffanordnung, weniger als 1 cm, vorzugsweise zwischen 0.1 und 0.6 cm. Die Oberfläche der metallischen Halterung auf der Seite der Verklebung, d.h. die Montagefläche, weist vorzugsweise einen Durchmesser von 1 bis 25 cm, bevorzugt von 2 bis 15 cm, noch mehr bevorzugt von 5 bis 10 cm auf und die Oberfläche beträgt vorzugsweise zwischen 0.5 und 2000 cm², bevorzugt zwischen 10 und 1000 cm², noch mehr bevorzugt zwischen 50 und 100 cm².

Eine Scheibe, welche an einer Tragkonstruktion befestigt werden soll, kann mehrere erfindungsgemässe Klebverbunde umfassen. Es wird mindestens eine metallische Halterung mit einer Scheibe verklebt. Vorzugsweise werden mehr als eine, insbesondere mehr als zwei, noch mehr bevorzugt mehr als drei, am meisten bevorzugt vier oder mehr als vier metallische Halterungen mit einer einzelnen Scheibe über die erfindungsgemässe Klebstoffanordnung verklebt. Je mehr metallische Halterungen mit einer einzelnen Scheibe verklebt werden, desto kleiner kann der jeweilige Durchmesser der Montagefläche der metallischen Halterung gewählt werden.

Es ist ein besonderer Vorteil der vorliegenden Erfindung, dass mit dem erfindungsgemässen Klebverbund kleinere metallische Halterungen verwendet werden können als bei herkömmlichen Verklebungen, weil mit dem erfindungsgemässen Klebverbund die Haltekräfte, d.h. die abzutragenden Lasten, welche beispielsweise vom Gewicht der Scheibe oder vom Windsog herrühren, besser auf die Scheibe übertragen werden können, und somit minimale Grössen der metallischen Halterungen ausreichen.

Unter "Scheibe" wird im gesamten vorliegenden Dokument eine flache oder gekrümmte Platte aus Glas oder einem im Wesentlichen durchsichtigen Kunststoff verstanden. Es kann sich hier um einschichtige oder mehrschichtige Platten handeln, insbesondere auch Scheiben mit Folien zwischen den Glasplatten, wie sie als Sicherheitsglasscheiben im Automobilbau zum Beispiel für die Windschutzscheibe zum Einsatz kommen oder um Scheiben mit einer Keramikbeschichtung, vorzugsweise Glasscheiben mit Keramikbeschichtung. Bevorzugt sind Scheiben aus mehrschichtigen Platten wie Isolierglasscheiben, insbesondere Doppelt- und Mehrfach- Isolierglasscheiben, wie sie im Fenster- und Türbau üblich sind. Vorzugsweise ist die Scheibe aus Glas.

Unter einem "(Meth)acrylatklebstoff" wird hier und im gesamten vorliegenden Dokument ein Klebstoff verstanden, welcher im unausgehärteten Zustand mindestens ein organisches (Meth)acrylat umfasst. Unter einem "organischen (Meth)acrylat" wird ein Monomer oder Oligomer verstanden, welches mindestens eine Estergruppe der Acrylsäure oder Methacrylsäure aufweist und somit mindestens eine polymerisierbare Doppelbindung aufweist.

Als organische (Meth)acrylate sind die dem Fachmann bekannten (Meth)acrylatmonomere oder -Oligomere geeignet. Die (Meth)acrylatmonomere weisen insbesondere eine, zwei oder drei (Meth)acrylatgruppen auf.

Insbesondere geeignet sind (Meth)acrylate der Formel (I) oder (II) 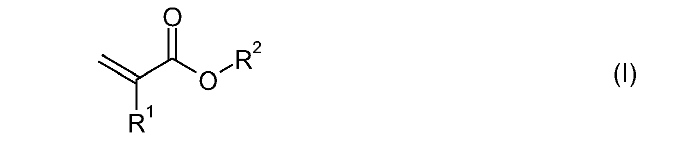 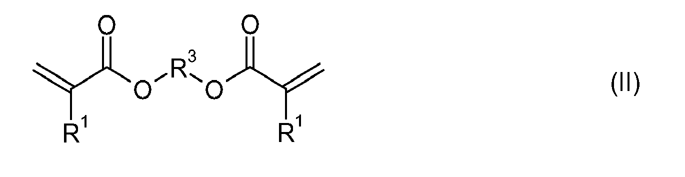 wobei R¹ für H oder CH₃ steht und wobei R² einen verzweigten oder unverzweigten organischen Rest darstellt, welcher insbesondere 1 bis 30, vorzugsweise 4 bis 10, Kohlenstoffatome aufweist und welcher bevorzugt mindestens ein Heteroatom, insbesondere mindestens ein O, aufweist. R² kann cyclische Anteile von gesättigtem, ungesättigtem oder aromatischem Charakter aufweisen.

Beispielhaft als (Meth)acrylatmonomere der Formel (I) genannt sind Hydroxyethyl(meth)acrylat, Hydroxypropyl(meth)acrylat, Hydroxybutyl(meth)-acrylat, Methyl(meth)acrylat, Ethyl(meth)acrylat, 2-Ethylhexyl(meth)acrylat, 2-Phenoxyethyl(meth)acrylat, Lauryl(meth)acrylat, Stearyl(meth)acrylat, Cyclohexyl(meth)acrylat, Trimethylcyclohexyl(meth)acrylat, tert.-Butyl(meth)acrylat, Dicylcopentadienyl(meth)acrylat, Dihydrodicyclopentadienylacrylat, Benzyl-(meth)acrylat, Isobornyl(meth)acrylat, Polypropylenglycolmono(meth)acrylat, Polyethylenglycolmono(meth)acrylat, Tetrahydrofurfuryl(meth)acrylat, alkoxyliertes Tetrahydrofurfuryl(meth)acrylat oder alkoxyliertes Phenol(meth)acrylat oder Lauryl(meth)acrylat.

R³ in Formel (II) steht für einen divalenten organischen Rest, welcher insbesondere 2 bis 100 C-Atome aufweist, und bevorzugt mindestens ein Heteroatom, insbesondere mindestens ein O, aufweist. R³ kann cyclische Anteile von gesättigtem, ungesättigtem oder aromatischem Charakter aufweisen.

Beispielhaft als (Meth)acrylatmonomere der Formel (II) genannt sind Ethylenglykoldi(meth)acrylat, Propylenglykoldi(meth)acrylat, Butylenglykoldi-(meth)acrylat, 1,6-Hexandioldi(meth)acrylat, Neopentylglycoldi(meth)acrylat, Bisphenol-A-di(meth)acrylat, Polyethylenglycoldi(meth)acrylat, Polypropylenglycoldi(meth)acrylat, ethoxyliertes Bisphenol-A-di(meth)acrylat.

Prinzipiell geeignet sind auch höher funktionelle (Meth)acrylatMonomere, wie beispielsweise Trimethylolpropantri(meth)acrylat, Pentaerythritoltri(meth)acrylat, zum Einsatz geeignet. Es ist in diesen Fällen jedoch bevorzugt, dass mindestens ein monofunktionelles oder ein difunktionelles (Meth)acrylat-Monomer vorhanden ist.

Als besonders geeignet als organisches (Meth)acrylat haben sich Methyl(meth)acrylat oder Tetrahydrofurfuryl(meth)acrylat sowie deren Abmischungen mit anderen (Meth)acrylaten erwiesen. Besonders bevorzugt ist Tetrahydrofurfurylmethacrylat oder Methylmethacrylat.

In einer Ausführungsform der Erfindung umfasst die erfindungsgemässe Zusammensetzung mindestens zwei (Meth)acylatmonomere der Formel (1) und/oder Formel (II). Bevorzugt ist mindestens eines davon Tetrahydrofurfurylmethacrylat oder Tetrahydrofurfurylacrylat oder Methyl(meth)acrylat.

Als (Meth)acrylat-Oligomere gelten insbesondere durch Teilpolymerisation der als (Meth)acrylat-Monomer geeigneten Monomeren erhaltenen Oligomere. Diese Oligomere müssen aber weiterhin immer noch mindestens eine (Meth)acrylatgruppe aufweisen.

Die Gewichtssumme aller organischen (Meth)acrylate beträgt insbesondere mehr als 30 Gewichts-%, bevorzugt zwischen 40 und 90 Gewichts-%, bezogen auf den (Meth)acrylatklebstoff.

Der (Meth)acrylatklebstoff kann gegebenenfalls noch weitere Bestandteile enthalten.

Derartige zusätzliche Bestandteile sind Core-Shell-Polymere, Flüssigkautschuke, Katalysatoren, organische und anorganische Füllstoffe, Farbstoffe, Pigmente, Inhibitoren, UV- und Hitzestabilisatoren, Antistatika, Flammschutzmittel, Biozide, Weichmacher, Wachse, Verlaufsmittel, Haftvermittler, Thixotropiermittel und weitere dem Fachmann bekannte gängige Rohstoffe und Additive.

Als Katalysatoren eignen sich einerseits insbesondere tertiäre Amine wie beispielsweise N,N-Dimethylanilin, N,N-Dimethyl-p-Toluidin, N,N-Diethylanilin, N,N-Diethyltoluidin, N,N-bis(2-hydroxyethyl)-p-Toluidin, N-ethoxylierte p-Toluidine, N-Alkylmorpholine oder Mischungen davon. Andererseits eignen sich Übergangsmetallsalze oder -Komplexe, insbesondere der Metalle Cobalt, Mangan, Vanadium und Kupfer, als Katalysatoren.

Als geeignete Haftvermittler sind insbesondere Alkoxysilane, Phosphoratome enthaltenden (Meth)acrylate, oder Metall(meth)acrylate zu nennen.

Als Polymerisationsinhibitoren sind insbesondere Hydrochinone, insbesondere Hydrochinon und Methylhydrochinone, oder t-butyl-p-Cresol geeignet.

Besonders geeignete zusätzliche Bestandteile sind neben Katalysatoren insbesondere Core-Shell-Polymere und Flüssigkautschuke.

Core-Shell-Polymer bestehen aus einem elastischen Kernpolymer und einem starren Schalen-Polymer. Insbesondere geeignete Core-Shell-Polymere bestehen aus einem Kern (Core) aus vernetztem elastischem Acrylat- oder Butadien-Polymer, welche auf eine starre Schale (Shell) eines starren thermoplastischen Polymers umgeben ist.

Besonders geeignete Core-Shell-Polymere sind diejenigen, welche im organischen (Meth)acrylat aufquellen, aber sich nicht lösen.

Bevorzugte Core-Shell-Polymere sind sogenannte MBS Polymere, welche kommerziell unter dem Handelsnamen Clearstrength™ von Atofina oder Paraloid™ von Rohm and Haas erhältlich sind. Die Core-Shell-Polymere werden bevorzugt in einer Menge von 5 bis 40 Gewichts-% bezogen auf die Zusammensetzung eingesetzt.

Als Flüssigkautschuke sind insbesondere Butadien/Acrylonitril-Copolymer basierende Flüssigkautschuke oder Polyurethan-basierende Flüssigkautschuke geeignet. Die Flüssigkautschuke weisen bevorzugt ungesättigte Doppelbindungen auf.

Als besonders geeignete Flüssigkautschuke haben sich einerseits vinylterminierte Butadien/Acrylnitril-Copolymere, wie sie unter der Produkte-Reihe Hycar^{®} VTBNX von BFGoodrich^{®}, beziehungsweise von Noveon kommerziell angeboten werden.

Andererseits als besonders geeignete Flüssigkautschuke gelten (Meth)acrylat-terminierte Polyurethanpolymere. Derartige Polymere können aus Polyolen und Polyisocyanaten unter Bildung von Isocyanat-funktionellen Polyurethanprepolymeren und anschliessender Umsetzung mit Hydroxyalkyl-(meth)acrylaten hergestellt werden.

Bevorzugte Isocyanat-funktionelle Polyurethanprepolymere sind das Reaktionsprodukt eines Polyisocyanates, insbesondere eines Diisocyanates und eines Polyols im Verhältnis Isocyanat-Gruppen-Equivalente zu HydroxylGruppen-Equivalente von grösser als 1. Somit sind auch Addukte vom Typ NCO-xx-NHCO-O-yy-O-OCONH-xx-OCN auch als Polyurethane Prepolymer in diesem Zusammenhang zu verstehen, wobei xx für ein Diisocyanat ohne NCO Gruppen und yy für ein Diol ohne OH Gruppen stehen.

Grundsätzlich kann hierfür jedes Polyol HO-R-(OH)_{q} mit q ≥ 1 verwendet werden, wobei R für ein Polymergerüst mit Heteroatomen im Gerüst oder als Seitenketten steht.

Bevorzugte Polyole sind Polyole, welche ausgewählt sind aus der Gruppe bestehend aus Polyoxyalkylenpolyole, auch "Polyetherpolyole" genannt, Polyesterpolyole, Polycarbonatpolyole und deren Mischungen. Bevorzugte Polyole sind Diole. Die meist bevorzugten Diole sind Polyoxyethylendiole oder Polyoxypropylendiole oder Polyoxybutylendiole .

Die Polyoxyalkylenpolyole können einen niedriegen Ungesättigtheitsgrad (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), oder auch einen höheren Ungesättigtheitsgrad, hergestellt beispielsweise mit Hilfe von anionischen Katalysatoren wie NaOH, KOH, CsOH oder Alkalialkoholaten, aufweisen.

Die Verwendung von Polyoxyalkylenpolyolen mit tiefem Ungesättigtheitsgrad, insbesondere von weniger als 0.01 mEq/g, wird für Polyole mit einem Molekulargewicht von ≥ 2000 bevorzugt.

Grundsätzlich können jegliche Polyisocyanate mit zwei oder mehr Isocyanatgruppen verwendet werden.

Beispielsweise seien erwähnt 2,4- and 2,6-Toluylenediisocyanat (TDI) und deren Mischungen, 4,4'-Diphenylmethandiisocyanat (MDI), jegliche Isomeren von Diphenylmethandiisocyanat, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- and 2,4,4-Trimethyl-1,6-hexamethylendiisocyanat (TMDI), 1,12-Dodecamethylendiisocyanat, Cyclohexan-1,3- und -1,4-diisocyanat und jegliche Mischungen dieser Isomeren miteinander, 1-Isocyanato-3,3,5-trimethyl-5-isocyanatomethyl-cyclohexan (=Isophorondiisocyanat oder IPDI), Perhydro-2,4'- and -4,4'-diphenylmethandiisocyanat (HMDI), 1,4-Diisocyanato-2,2,6-trimethylcyclohexan (TMCDI), m- und p-Xylylenediisocyanat (XDI), 1,3- and 1,4-Tetramethylxylylenediisocyanat (TMXDI), 1,3- and 1,4-Bis-(isocyanatomethyl)-cyclohexan, jegliche Oligomere oder Polymere der oben genannten Isocyanate sowie jegliche Mischungen der genannten Isocyanate untereinander. Bevorzugte Polyisocyanate sind MDI, TDI, HDI, IPDI und deren Mischungen untereinander. Meist bevorzugt sind IPDI und HDI und deren Mischung.

Die aus den Polyolen und Polyisocyanaten hergestellten Isocyanatterminierten Prepolymeren werden mit (Meth)acrylsäureestern, welche Hydroxylgruppen aufweisen, umgesetzt. Bevorzugte (Meth)acrylsäureestern, welche Hydroxylgruppen aufweisen, sind Hydroxyethyl(meth)acrylat oder Hydroxypropyl(meth)acrylat. Die zwei Reaktanden werden in an und für sich bekannter Art und Weise miteinander reagiert, typischerweise in einem stöchiometrischen Überschuss des (Meth)acrylsäureesters, welcher Hydroxylgruppen aufweist.

Das bevorzugte (Meth)acrylat-terminierte Polyurethanpolymer ist das Reaktionsprodukt eines IPDI/Polypropylenglycol-Polyurethanprepolymers oder eines HDI/Polypropylenglycol-Polyurethanprepolymers mit Hydroxyethyl(meth)-acrylat oder mit Hydroxypropyl(meth)acrylat.

Die Herstellung des Polyurethanprepolymers und/oder des (Meth)acrylat-terminierten Polyurethanpolymers kann in Gegenwart des organischen (Meth)acrylates erfolgen, so lange dieses keine NCO-raktiven Gruppen aufweist.

Die Flüssigkautschuke werden bevorzugt in einer Menge von 5 bis 40 Gewichts-% bezogen auf den (Meth)acrylatklebstoff eingesetzt.

Der (Meth)acrylatklebstoff ist grundsätzlich mit den dem Fachmann bekannten Verfahren und Apparaturen herstellbar. Insbesondere hat sich jedoch das folgenden Herstellverfahren als vorteilhaft erwiesen:

Das organische (Meth)acrylat wird in einem Reaktionsgefäss vorgelegt. Anschliessend wird der gegebenenfalls vorhandene Flüssigkautschuk und/oder Core-Shell-Polymer eingerührt. Schliesslich werden weitere Rohstoffe wie Aktivatoren, Haftvermittler, Additive etc. eingerührt. Nachdem eine homogene Zusammensetzung erhalten wurde, wird sie gegebenenfalls entlüftet und abgepackt.

Der (Meth)acrylatklebstoff kann thermisch, durch Strahlung oder durch chemische Erzeugung von Radikalen ausgehärtet werden.

In einer bevorzugten Ausführungsform erfolgt die Aushärtung durch chemische Radikalerzeugung. In diesem Fall ist der (Meth)acrylatklebstoff ein radikalisch aushärtender zweikomponentiger (Meth)acrylatklebstoff, welcher aus einer ersten Komponente **K1** und einer zweiten Komponente **K2** besteht. Die verwendeten Rohstoffe werden dazu so auf die beiden Komponenten verteilt, dass eine ausreichende Lagerstabilität gewährleistet ist. Ein bevorzugter derartige zweikomponentiger (Meth)acrylatklebstoff ist wie folgt beschrieben:

Die erste Komponente **K1** bildet den oben beschriebenen (Meth)acrylatklebstoff.

Die zweite Komponente **K2** enthält einen Radikalbildner. Dieser Radikalbildner ist insbesondere ein Peroxid oder ein Perester. Als Peroxid sind neben Wasserstoffperoxid vor allem organische Peroxide oder Hydroperoxide zu nennen.

Die einsetzbaren organischen Peroxide oder Hydroperoxide richten sich nach den Einsatzgebieten, Temperaturen und der chemischen Kompatibilität mit anderen Rohstoffen. Als Peroxid besonders bevorzugt hat sich Dibenzoylperoxid erwiesen. Als Hydroperoxide sind insbesondere Cumolhydroperoxid und Isopropylcumolhydroperoxid bevorzugt.

Als Radikalbildner ist Dibenzoylperoxid bevorzugt.

Die Komponente **K2** kann weitere Bestandteile enthalten. Insbesondere sind dies die bei dem als Komponente **K1** wirkenden (Meth)acrylatklebstoff vorgängig genannten zusätzlichen Bestandteile, unter der Bedingung, dass diese zusätzlichen Bestandteile nicht mit anderen Inhaltsstoffen wie z. B. dem Radikalbildner zumindest während der Lagerzeit in nennenswertem Ausmass reagieren.

Die Komponente **K1** und **K2** verfügen vorzugsweise über vergleichbare Viskositäten.

Vorzugsweise beträgt das Volumenverhältnis von Komponente **K1** und **K2** zwischen 20:1 und 1:2, bevorzugt in etwa 10:1.

Die Komponenten **K1** und **K2** werden zur Aushärtung gemischt. Die daraus resultierende Mischung ist vorzugsweise pastös und bevorzugt thixotrop. Die Komponenten **K1** und **K2** sind vor dem Mischen in separaten Behältnissen aufbewahrt.

Geeignet ist ein (Meth)acrylatklebstoff, welcher durch Strahlung aushärtet. Die Aushärtung erfolgt insbesondere durch UV-Strahlung mit Hilfe einer UV-Lampe.

Unter einem "Silicondichtstoff" wird hier und im gesamten vorliegenden Dokument ein Dichtstoff verstanden, welcher mindestens ein Polydiorganosiloxan sowie mindestens ein Vernetzungsmittel umfasst. Solche Dichtstoffe werden auch als Siliconkautschuke bezeichnet, welche als Grundpolymere Polydiorganosiloxane enthalten, die mindestens zwei reaktive Gruppen aufweisen. Als reaktive Gruppe kommen vorzugsweise H-, OH-, Alkoxy- oder Vinyl-Gruppen in Frage, die sich vorzugsweise an den Kettenenden befinden, aber auch in die Kette eingebaut sein können.

Besonders bevorzugt sind kaltvulkanisierende Siliconkautschuke (engl.: room temperature vulcanizing, RTV). Es sind sowohl einkomponentige (RTV-1) wie auch zweikomponentige (RTV-2) Systeme geeignet. Bei RTV-1 Systemen bestehen die Raumtemperatur-vernetzenden Kautschuke aus einer Komponente, d.h. der Vernetzer ist im Kautschuk enthalten und wird bereits bei Luftfeuchtigkeit aktiv. Bei RTV-2 Systemen bestehen die Raumtemperaturvernetzende Kautschuke, aus zwei Komponenten; die Vernetzung setzt erst beim Zusammenmischen der beiden Komponenten ein. Als Vernetzerkomponente bei Zweikomponentenkautschuken werden beispielsweise Gemische aus Kieselsäureestern (z.B. Ethylsilicat) und Zinnorganischen Verbindungen verwendet.

Als besonders bevorzugt hat sich das Einkomponentensystem (RTV-1) erwiesen, bei welchem der Silicondichtstoff bei Raumtemperatur unter dem Einfluss von Feuchtigkeit, insbesondere von Luftfeuchtigkeit, polymerisiert, wobei die Vernetzung durch Kondensation von SiOH-Gruppen unter Bildung von Si-O-Si-Bindungen erfolgt.

Als Vernetzer, bzw. Vernetzungsmittel eignen sich polyfunktionelle, siliciumorganische Verbindungen, die bei Raumtemperatur mit OH-Gruppen, wie z.B. Silanolgruppen der Polymere oder der OH-Gruppen von Wasser, reagieren können. Polyfunktionell bedeutet, dass mindestens drei reaktionsfähige Gruppen im Vernetzermolekül vorhanden sind. Je nach verwendetem Vernetzungsmittel kann die Aushärtung der RTV-1 Kautschuke sauer, z. B. bei Anwesenheit von Carboxysilanen, basisch, z. B. mittels Aminosilanen oder neutral, z. B. durch Oximo- oder Alkoxygruppen aufweisende Verbindungen, erfolgen. Vorzugsweise wird als Vernetzungsmittel mindestens ein Carboxysilan, mindestens ein Oximosilan, oder mindestens ein Alkoxysilan eingesetzt. Als besonders geeignet haben sich neutralvernetzende Silicondichtstoffe, welche mindestens ein Ketoximo- oder mindestens ein Alkoxysilan, enthalten, erwiesen. Neutralvernetzende Silicondichtstoffe, welche bei der Vernetzung ein neutrales Spaltprodukt freisetzen, werden vor allem dann eingesetzt, wenn eine Reaktion oder Unverträglichkeit mit dem Untergrund vermieden werden soll.

Als Vernetzer eignet sich bevorzugt ein Organosilan und/oder dessen partielles Hydrolysat der allgemeinen Formel (III)

R⁴ₓSi(OR⁵)₄₋ₓ (III)

wobei R⁴ unabhängig voneinander für H oder unsubstituierte oder substituierte Alkyl- und/oder Alkenyl- und/oder Arylreste, bevorzugt Methyl, steht und
wobei R⁵ unabhängig voneinander für H und/oder unsubstituierte und/oder substituierte Alkyl-, Acyl-, und/oder Silylreste steht, und
wobei x entweder 0 oder 1 ist.

Die Substituenten R⁴ und R⁵ können Homoatome oder Heteroatome enthalten wie beispielsweise N oder O. Geeignete Substituenten sind beispielsweise Epoxy, Amine, Ester oder Oxime, vorzugsweise Amine oder Oxime.

Besonders bevorzugt ist das Organosilan ein Alkoxysilan, ein Acetoxysilan, ein Aminosilan, ein Carboxysilan oder ein Oximosilan, insbesondere ein Alkoxysilan oder ein Ketoximosilan.

Als Alkoxysilane besonders geeignet sind Methoxy- oder Ethoxysilane. Es können beispielsweise folgende Verbindungen eingesetzt werden: Methyltrimethoxysilan, Methyltriethoxysilan, Vinyltriethoxysilan, Tetraethoxysilan, Phenyltriethoxysilan, Tetrakis(2-methoxyethoxy)-silan, Tetrakis(2-butoxyethoxy)silan, N-1-(Triethoxysilyl)ethylpyrrolidon-(2), N-2-(Triethoxysilyl)ethylpyrrolidon-(2), N-1-(Triethoxysilyl)ethyl-N-methylacetamid, N-2-(Triethoxysilyl)-ethyl-N-methylacetamid, N-1-(Triethoxysilyl)ethylsuccinimid, N-2-(Triethoxysilyl)ethylsuccinimid, N-1-(Triethoxysilyl)ethylphthalimid, N-2-(Triethoxysilyl)-ethylphthalimid, N-1-(Tris(2-methoxyethoxy)silyl)ethyl-N-methylthioacetamid, N-2-(Tris(2-methoxyethoxy)silyl)ethyl-N-methylthioacetamid oder Gemische der N-1-(Triethoxysilyl)ethyl- und N-2-(Triethoxysilyl)ethylamide. Es können auch beliebige Gemische der erwähnten Verbindungen eingesetzt werden.

Als Oximosilane sind Aldoximo- oder Ketoximosilane geeignet, vorzugsweise Methylisobutylketoximosilane oder Methylethylketoximosilane.

Die einzusetzende Menge des Organosilanes der allgemeinen Formel (III) richtet sich nach dem Gehalt an siliciumgebundenen Hydroxyl- oder Alkoxygruppen des Polydiorganosiloxanes der allgemeinen Formel (IV) und ist vom Fachmann auf die jeweiligen Verhältnisse leicht anzupassen. Vorzugsweise ist das Alkoxysilan der allgemeinen Formel (III) in Mengen zwischen 0,1 und 10 Gew.-%, besonders bevorzugt 1 bis 5 Gew.-% bezogen auf das Gesamtgewicht des Silicondichtstoffs, enthalten.

Die Silicondichtstoffe enthalten vorzugsweise mindestens ein lineares Polydiorganosiloxan mit mindestens zwei hydrolysierbaren Endgruppen. Vorzugsweise wird ein hydroxyterminiertes Polydiorganosiloxan der allgemeinen Formel (IV) eingesetzt

HO(SiR⁶₂O)ₙH (IV)

wobei R⁶ unabhängig voneinander unsubstituierte oder substituierte Alkyl- und/oder Alkenyl- und/oder Arylreste, bevorzugt Methyl, bedeutet und n Werte von 20 bis 3000, bevorzugt Werte von 100 bis 1600 annimmt.

Die eingesetzten Polydiorganosiloxane der allgemeinen Formel (IV) sind bekannt. Üblicherweise werden sie entweder durch Polymerisation von cyclischen Siloxanen in Gegenwart stark basischer oder saurer Katalysatoren und geringer Mengen Wasser oder durch Polykondensation von kurzkettigen linearen Oligomeren mit OH-Endgruppen hergestellt. Da die zur Synthese verwendeten Ausgangsverbindungen neben den hauptsachlich erwünschten difunktionellen Einheiten aber auch noch tri- und tetrafunktionelle Einheiten enthalten können, sind stets auch Verbindungen in den Polymeren enthalten, die eine oder auch mehrere Verzweigungen im Molekül enthalten. Je grösser der Gehalt an tri- oder tetrafunktionellen Einheiten in den Ausgangsmaterialien und je grösser die Molmasse des Polymeren ist, desto grösser wird die Wahrscheinlichkeit, dass die Moleküle Verzweigungsstellen enthalten. Vorzugsweise ist das Polydiorganosiloxan ein α,ω-Dihydroxypolydialkylsiloxan oder ein α,ω-Dialkoxysilylpolydialkylsiloxan. Bevorzugte Substituenten R⁶ sind Methyl-, Ethyl-, Phenyl-, Vinyl- und Trifluorpropylreste. Besonders bevorzugt sind wegen der leichten Verfügbarkeit α,ω-Dihydroxypolydimethylsiloxane, bei denen in der Formel (IV) n Werte von 100 bis 1600 annimmt. Obwohl die Verwendung rein linearer Polymere bevorzugt ist, können auch solche Polymere verwendet werden, die Verzweigungsstellen enthalten. Im Silicondichtstoff der vorliegenden Erfindung sind üblicherweise 30 bis 70 Gew.-% Polydiorganosiloxane der allgemeinen Formel (IV) enthalten.

Der Silicondichtstoff kann gegebenenfalls noch weitere Bestandteile enthalten.

Derartige zusätzliche Bestandteile sind Weichmacher, Katalysatoren, anorganische und/oder organische Füllstoffe, Härtungsbeschleuniger, Pigmente, Haftvermittler, Verarbeitungshilfsmittel, Farbstoffe, Inhibitoren, Hitzestabilisatoren, Antistatika, Flammschutzmittel, Biozide, Wachse, Verlaufsmittel, Thixotropiermittel und weitere dem Fachmann bekannte gängige Rohstoffe und Additive. Vorzugsweise enthält der Silicondichtsoff neben mindestens einem Polydiorganosiloxan und mindestens einem Vernetzungsmittel mindestens einen Weichmacher, mindestens einen Katalysator und gegebenenfalls mindestens einen Füllstoff.

Als Weichmacher sind besonders alkylterminierte Polydialkylsiloxane geeignet, insbesondere methylterminierte Polydimethylsiloxane. Vorzugsweise werden trimethylsilylterminierte Polydimethylsiloxane mit Viskositäten zwischen 0,01 und 10 Pas. Besonders bevorzugt sind Viskositäten zwischen 0,1 und 1 Pas. Es können jedoch auch methylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwobl besonders bevorzugt lineare trimethylsilylterminierte Polydimethylsiloxane als Weichmacher eingesetzt werden, könne auch solche Verbindungen verwendet werden, die einige Verzweigungsstellen enthalten, die dadurch entstehen, dass in den zur Herstellung der Weichmacher dienenden Ausgangsprodukten kleine Mengen tri- oder tetrafunktioneller Silane enthalten sind. Es ist aber auch möglich anstatt der Siloxane, bis zu 25 Gew.-%, bezogen auf die Gesamtmischung, andere organische Verbindungen, wie z. B. bestimmte aromatenfreie Kohlenwasserstoffgemische, als Weichmacher einzusetzen.

Um eine genügend hohe Vernetzungsgeschwindigkeit zu erreichen werden vorzugsweise 0.01 bis 5 Gew.-%, bezogen auf das Gesamtgewicht des Silicondichtstoffs, eines Katalysators eingesetzt. Üblich sind zinnorganische Verbindungen, vorzugsweise Dialkylzinnverbindungen, wie z. B. Dibutylzinndilaurat oder -diacetat, bzw. Titanverbindungen, wie Tetrabutyl- oder Tetraisopropyltitanat, oder Titanchelate. Es können auch Katalysatorgemische eingesetzt werden.

Zur Erzielung bestimmter mechanischer Eigenschaften können aktive oder inaktive Füllstoffe eingesetzt werden. Bevorzugte Füllstoffe mit hoher spezifischer Oberfläche sind pyrogene Kieselsäure oder gefälltes Calciumcarbonat. Darüber hinaus können Füllstoffe mit geringer spezifischer Oberfläche als Extender verwendet werden. Bei inaktiven Füllstoffen treten chemische oder physikalische Wechselwirkungen mit dem Polymer nicht oder nur im untergeordneten Umfang auf. In der Praxis werden Calciumcarbonate, Aluminiumsilicate, Quarzmehl, Diatomeenerde, Eisenoxide etc. eingesetzt. Bevorzugt ist hierbei gemahlenes Calciumcarbonat. In einer besonders bevorzugten Ausführungsform enthält der Silicondichtstoff des erfindungsgemässen Klebverbundes pyrogene Kieselsäure als Füllstoff.

Besonders geeignet sind als Haftvermittler vorzugsweise mit funktionellen Gruppen substituierte Alkoxysilane. Die funktionelle Gruppe ist beispielsweise eine Aminopropyl-, Glycidoxypropyl- oder Mercaptopropylruppe. Bevorzugt sind aminofunktionelle Gruppen. Bei der Alkoxygruppe des Silans handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von mit funktionellen Gruppen substituierter Alkoxysilane einzusetzen.

Als besonders geeignete Silicondichtstoffe haben sich die Siliconkautschuk-Mischungen erweisen, welche in EP0885931A2 beschrieben sind.

Die Herstellung des Silicondichtstoffs kann kontinuierlich oder diskontinuierlich nach den dem Fachmann bekannten Verfahren und Apparaturen erfolgen.

In einer besonders bevorzugten Ausführungsform wird die Scheibe mit der metallischen Halterung über einen chemisch härtenden (Meth)acrylatklebstoff verklebt, welcher von einem Silicondichtstoff ummantelt ist, welcher α,ω-Dialkoxypolydimethylsiloxan, ein Alkoxysilan, trimethylsilylterminiertes Polydimethylsiloxan, sowie Dibutylzinndiacetat umfasst.

In einem weiteren Aspekt betrifft die vorliegende Erfindung die Verwendung eines erfindungsgemässen Klebverbunds zum Befestigen einer Scheibe an einer Tragkonstruktion. Die Tragkonstruktion kann beispielsweise eine Fassade eines Gebäudes oder eine metallische Konstruktion, welche an eine Fassade angebracht ist, sein. Die Tragkonstruktion kann aber auch ein beliebiges Gebäude im Hoch- oder Tiefbau, ein Industriegut oder ein Teil davon, wie beispielsweise ein Tischbein, oder ein Teil eines Transportmittels, wie beispielsweise die Karosserie eines Fahrzeugs, Schiffs oder Flugzeugs, sein.

Der erfindungsgemässe Klebverbund ermöglicht eine sehr gute Haftung bei jeder Witterung. Beispielsweise können Klebverbunde beim Verkleben von Glasplatten mit Teilen von Gebäudefassaden extremen Witterungsverhältnissen ausgesetzt sein. Durch das vollständige Ummanteln des (Meth)acrylatklebstoffs mit Silicondichtstoff bleibt die gute Haftung des (Meth)acrylatklebstoffs auf der Scheibe sowie auf der metallische Halterung erhalten und Regen oder hohe Luftfeuchtigkeit beeinträchtigt die Haftung kaum.

Weiterhin betrifft die Erfindung ein Verfahren zum Befestigen einer metallischen Halterung an einer Scheibe umfassend die Schritte
- Applikation eines (Meth)acrylatklebstoffs auf die Scheibe und/oder die metallische Halterung, und Kontaktieren des (Meth)acrylatklebstoffs mit der Scheibe und/oder der metallischen Halterung, oder Applikation eines (Meth)acrylatklebstoffs zwischen die Scheibe und die metallische Halterung;
- Applikation eines Silicondichtstoffs um den (Meth)acrylatklebstoff herum.

Das Kontaktieren des (Meth)acrylatklebstoffs mit der Scheibe und/oder der metallischen Halterung erfolgt innerhalb der Offenzeit des Klebstoffs. Vorzugsweise wird der (Meth)acrylatklebstoff auf die Scheibe aufgetragen und innerhalb der Offenzeit mit der metallischen Halterung gefügt. Die Scheibe und die metallische Halterung kann aber auch bereits im Voraus, beispielsweise mit einem Abstandhalter, in den gewünschten Abstand voneinander gebracht werden und anschliessend kann der (Meth)acrylatklebstoff zwischen die Scheibe und die metallische Halterung appliziert werden. Der Abstandhalter kann zusätzlich dafür verwendet werden, dass der (Meth)acrylatklebstoff in der gewünschten Form, beispielsweise im Wesentlichen kreisförmig bei einem Punkthalter, sowie in der gewünschten Grösse appliziert werden kann. Die Höhe des Abstandhalters bestimmt den Abstand zwischen der Scheibe und der metallischen Halterung. Der Abstandhalter ist beispielsweise ein Ring mit einer Öffnung, durch die der (Meth)acrylatklebstoff nach dem Applizieren der metallischen Halterung auf den Abstandhalter, welcher sich zwischen der Scheibe und der metallischen Halterung befindet, eingebracht wird. In einer anderen Ausführungsform wird zuerst der Abstandhalter an die gewünschte Position auf der Scheibe gebracht, mit (Meth)acrylatklebstoff ausgefüllt, und anschliessend wird die metallische Halterung auf den (Meth)acrylatklebstoff gepresst. Durch die Öffnung des Abstandhalters kann in diesem Fall der überschüssige (Meth)acrylatklebstoff ausgepresst werden. Der Abstandhalter kann beispielsweise aus heissvulkanisierendem Siliconkautschuk sein.

Nach dem Fügen erfolgt in einem weiteren Schritt vorzugsweise die Aushärtung des Klebstoffes. Die Applikation des Silicondichtstoffs um den (Meth)acrylatklebstoff herum kann entweder unmittelbar nach dem Auftragen des (Meth)acrylatklebstoffs geschehen oder vorzugsweise nach dem Aushärten des (Meth)acrylatklebstoffs. Es ist dem Fachmann jedoch selbstverständlich bewusst, dass die Vernetzung des Klebstoffs unmittelbar nach dem Kontakt mit Luftfeuchtigkeit oder bei Aussetzung von UV-Licht, beginnt. Somit ist der Term des Aushärtens nicht als Beginn des Aushärtens, sprich Beginn der Vernetzung, zu verstehen, sondern dahin gehend, dass die Vernetzung bereits genügend weit fortgeschritten ist, dass der Klebstoff bereits eine so grosse Festigkeit aufgebaut hat, dass er Kräfte übertragen kann, und die sogenannte Frühfestigkeit erreicht hat. Die Aushärtung ist abgeschlossen, wenn der Klebstoff seine Endfestigkeit erreicht hat. Der Silicondichtstoff kann während der ganzen Zeit des Aushärtens wie auch nach abgeschlossener Aushärtung um den (Meth)acrylatklebstoff appliziert werden.

Geeignete Methoden zum Auftragen (Meth)acrylatklebstoffes beziehungsweise des Silicondichtstoffes sind beispielsweise die Applikation aus handelsüblichen Kartuschen, welche bevorzugt manuell betrieben werden. Eine Applikation mittels Druckluft aus einer handelsüblichen Kartusche oder aus einem Fass oder Hobbock mittels einer Förderpumpe oder eines Extruders, gegebenenfalls mittels eines Applikations-Roboters, ist ebenfalls möglich.

Die Scheibe und/oder die metallische Halterung kann bei Bedarf vor dem Applizieren des Kleb- und Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen oder Behandeln mit Reinigern oder Lösemitteln; oder das Aufbringen eines Haftvermittlers, einer Haftvermittlerlösung oder eines Primers; oder eine Beflammung oder eine Plasmabehandlung, insbesondere eine Luftplasma-Vorbehandlung bei atmosphärischem Umgebungsdruck.

Nach dem Befestigen einer metallischen Halterung an einer Scheibe wird ein Artikel erhalten, welcher einen erfindungsgemässen Klebverbund umfasst. Ein derartiger Artikel kann ein Bauwerk sein, insbesondere ein Bauwerk des Hoch- oder Tiefbaus, oder er kann ein industrielles Gut oder ein Konsumgut wie beispielsweise ein Fenster, eine Haushaltmaschine oder ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon. Bevorzugt ist der Artikel ein Gebäude oder ein Industriegut oder ein Anbauteil davon.

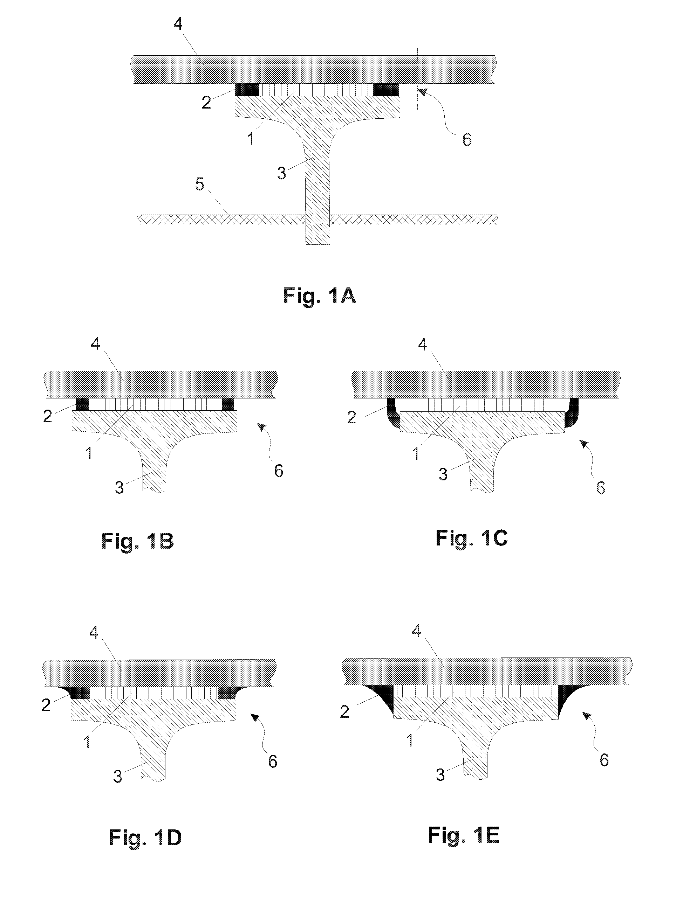

**Fig. 1** zeigt eine schematische Darstellung eines Teillängsschnitts durch den Klebverbund **6**. Die metallische Halterung **3** ist über einen (Meth)acrylatklebstoff **1** mit der Scheibe **4** verklebt. Der (Meth)acrylatklebstoff **1** ist vollständig vom Silicondichtstoff **2** ummantelt. Die metallische Halterung **3** ist vorzugsweise ein Punkthalter.

In Fig. **1A** ist der Silicondichtstoff **2** in unmittelbarem Kontakt mit dem (Meth)acrylatklebstoff **1.** Die metallische Halterung **3** ist auf der, der Verklebung gegenüberliegenden Seite an einer Tragkonstruktion **5** befestigt. Die Befestigung kann nach einem dem Fachmann bekannten Verfahren erfolgen. Die Tragkonstruktion ist beispielsweise eine Fassade oder ein Eisengestell, welches an einer Fassade befestigt ist.

In Fig. **1B** ist der Silicondichtstoff **2** nicht in direktem Kontakt mit dem (Meth)acrylatklebstoff **1,** sondern es besteht ein Abstand zwischen dem Silicondichtstoff **2** und dem (Meth)acrylatklebstoff **1.**

In Fig. **1C** zeigt eine weitere Version, in der der Silicondichtstoff **2** nicht in direktem Kontakt mit dem (Meth)acrylatklebstoff **1** ist. Es besteht ebenfalls ein Abstand zwischen dem Silicondichtstoff **2** und dem (Meth)acrylatklebstoff **1**. Der Silicondichtstoff **2** befindet sich nicht nur zwischen der Scheibe **4** und der metallischen Halterung **3,** sondern ist an der Aussenseite der metallischen Halterung **3** angebracht.

In Fig. **1D** und **1E** zeigen weitere Ausführungsformen, bei denen der (Meth)acrylatklebstoff **1** vollständig vom Silicondichtstoff **2** ummantelt ist und der (Meth)acrylatklebstoff **1** somit vollständig von der Umgebungsluft abgedichtet ist.

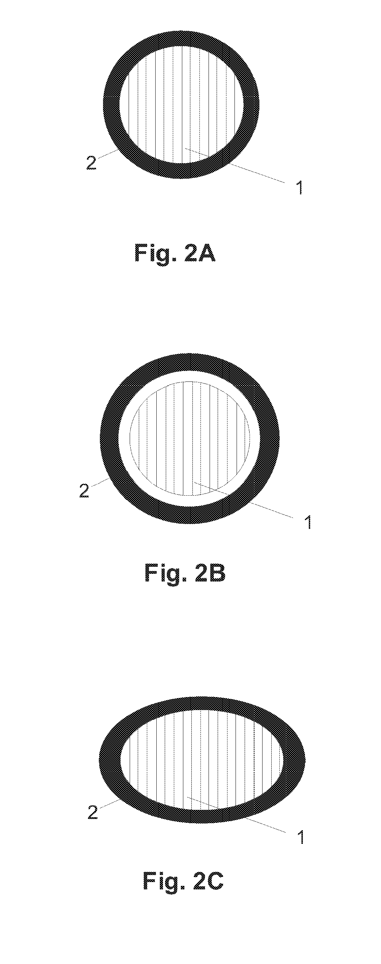

**Fig. 2** zeigt eine schematische Darstellung eines Querschnitts durch die Verklebung bei der der (Meth)acrylatklebstoff **1** vollständig vom Silicondichtstoff **2** ummantelt ist.

In **Fig. 2A** ist der Silicondichtstoff **2** in direktem Kontakt mit dem (Meth)acrylatklebstoff **1.** Der Querschnitt weist eine im Wesentlichen kreisförmige Form auf, der (Meth)acrylatklebstoff **1** bildet einen konzentrischen Kreis, um welchen der Silicondichtstoff **2** ringförmig angebracht wurde. Diese Form eignet sich vorzugsweise für metallische Punkthalter.

In Fig. **2B** ist der Silicondichtstoff **2** nicht in direktem Kontakt mit dem (Meth)acrylatklebstoff **1,** sondern es besteht ein Abstand zwischen dem Silicondichtstoff **2** und dem (Meth)acrylatklebstoff **1.**

In **Fig. 2C** ist der Silicondichtstoff **2** in direktem Kontakt mit dem (Meth)acrylatklebstoff **1.** Der Querschnitt weist eine im Wesentlichen ovale Form auf.

### Beispiele

### Beschreibung der Prüfmethoden

Zur Überprüfung der Wirksamkeit der Erfindung wurden verschiedene verklebte Probekörper mit den Substraten Floatglas und Edelstahl gefertigt. Die Vorbehandlung beider Substratoberflächen erfolgte jeweils mit Sika^{®}ADPrep (erhältlich bei der Sika Schwei AG). Die **Zugfestigkeit** wurde bestimmt an Floatglas-Edelstahl-H-Probekörpern (in Anlehnung an ISO 8339) mit einer Klebstoffschichtdicke von 4 mm (Klebefläche 4 x 50 mm; Messung bei 23 °C mit einer Zuggeschwindigkeit von 5 mm/min). Im Falle der mit dem Silicondichtstoff Sikasil^{®} SG-20 (erhältlich bei der Sika Schweiz AG) ummantelten Acrylat-Verklebung (Sika^{®}Fast-5211, erhältlich bei der Sika Schweiz AG) betrug die Klebefläche des Acrylates ebenfalls 4 x 50 mm. Die Siliconummantelung hatte eine Stärke von ca. 0.5 mm, so dass die Gesamtklebefläche etwa 5 x 51 mm betrug.

Ein Teil der Probekörper wurde nach der Aushärtung (7 Tage bei 23 °C/50 % relativer Feuchte) geprüft. Die übrigen Probekörper wurden einer künstlichen Alterung unterworfen. Diese erfolgte über einen Zeitraum von 14 Tagen in einem Suntest XLS der Firma Atlas bei einer Wassertemperatur bei 55°C und mit einer Bestrahlungsleistung von 550 Watt. Diese Lagerung basiert auf der in der Richtlinie der Europäischen Organisation für Technische Zulassungen (EOTA) für geklebte Glaskonstruktionen ETAG 002 angegebenen Metgode zur UV/Wasserlagerung. Tabelle 1 zeigt, dass die die Zugfestigkeit nach künstlicher Alterung deutlich erhöht ist, wenn der Klebverbund ein (Meth)acrylatklebstoff umfasst, welcher vom Silicondichtstoff ummantelt ist, verglichen mit dem Klebverbund ohne Siliconummantelung.

Die **Zugscherfestigkeit** wurde in Anlehnung an ISO 4587/DIN EN 1465 auf einer Zugmaschine Zwick/Roell Z005 bestimmt (Klebefläche: 12mmx25mm, Schichtdicke: 1.5mm, Messgeschwindigkeit: 10 mm/min; Substrate: Floatglasplättchen, Messtemperatur: 23°C). Die Glasplättchen wurden in der in der Norm beschriebenen Art angeordnet, sodass eine mit Klebstoff gefüllte Überlappung der Dimensionen 12 mm Breite, 25 mm Länge und 1.5 mm Dicke entstand. Im Falle der mit Silicondichtstoff ummantelten Verklebung wurde dabei zuerst SikaFast^{®}-5211 (kommerziell erhältlich bei Sika Schweiz AG) in einer Fläche von 12 x 25 mm auf die Glasplättchen aufgetragen und anschliessend wurde Sikasil^{®}SG-20 (kommerziell erhältlich bei Sika Schweiz AG) rechteckig um den SikaFast®-5211 aufgetragen , so dass insgesamt eine Klebefläche von 15 x 28 mm ausgebildet wurde. Dies entspricht einer rechteckigen Ummantelung von 1.5 mm Stärke. Ein Teil der Probekörper wurde nach der Aushärtung (7 Tage bei 23 °C/50 % relativer Feuchte) geprüft. Die übrigen Probekörper wurden einer künstlichen Alterung unterworfen. Diese erfolgte über einen Zeitraum von 14 Tagen in einem Suntest XLS der Firma Atlas bei einer Wassertemperatur bei 55°C und mit einer Bestrahlungsleistung von 550 Watt. Diese Lagerung basiert auf der in der Richtlinie der Europäischen Organisation für Technische Zulassungen (EOTA) für geklebte Glaskonstruktionen ETAG 002 angegebenen Methode zur UV/Wasserlagerung. Anschliessend wurden die Prüflinge mit einer Querjochgeschwindigkeit von 10 mm/min bis zum Bruch auseinander gezogen. Tabelle 1 zeigt, dass die Zugscherfestigkeit nach künstlicher Alterung deutlich verbessert wird, wenn der Klebverbund ein (Meth)acrylatklebstoff umfasst, welcher vom Silicondichtstoff ummantelt ist, verglichen mit dem Klebverbund ohne Siliconummantelung.

**Tabelle 1: Prüfergebnisse der Probeverklebung; d = Tag**

| **Ergebnisse der mechanischen Prüfungen:** | | | | |
|---|---|---|---|---|
| Klebstoff | SikaFast®-5211 | SikaFast®-5211 | SikaFast®-5211 ummantelt mit Sikasil®SG-20 | SikaFast®-5211 ummantelt mit Sikasil®SG-20 |
| Lagerung | 7 d Aushärtung | 14 d Suntest | 7 d Aushärtung | 14 d Suntest |
| Zugfestigkeit [MPa] | 3.10 | 0.31 | 3.10 | 1.76 |
| Zugscherfestigkeit [MPa] | 4.77 | 1.53 | 5.55 | 4.70 |

Selbstverständlich ist die Erfindung nicht auf das gezeigte und beschriebene Ausführungsbeispiel beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

### Bezugszeichenliste

- 1: (Meth)acrylatklebstoff
- 2: Silicondichtstoff
- 3: Metallische Halterung
- 4: Scheibe
- 5: Tragkonstruktion
- 6: Klebverbund

## Patentansprüche

1. Klebverbund (6) umfassend eine metallische Halterung (3) und eine Scheibe (4), **dadurch gekennzeichnet, dass** die Halterung (3) und die Scheibe (4) über einen (Meth)acrylatklebstoff (1) miteinander verklebt sind, und wobei der (Meth)acrylatklebstoff (1) vollständig von einem Silicondichtstoff (2) ummantelt ist.

2. Klebverbund (6) nach einem der vorhergehenden Ansprüche, **dadurch gekennzeichnet, dass** der Silicondichtstoff (2) zwischen der metallischen Halterung (3) und der Scheibe (4) angeordnet ist.

3. Klebverbund (6) nach einem der vorhergehenden Ansprüche, **dadurch gekennzeichnet, dass** der Silicondichtstoff (2) mit dem (Meth)acrylatklebstoff (1) in direktem Kontakt ist.

4. Klebverbund (6) nach einem der vorhergehenden Ansprüche, **dadurch gekennzeichnet, dass** der (Meth)acrylatklebstoff (1) im ungehärteten Zustand mindestens ein Methyl(meth)acrylat oder ein Tetrahydrofurfuryl(meth)acrylat umfasst.

5. Klebverbund (6) nach einem der vorhergehenden Ansprüche, **dadurch gekennzeichnet, dass** der (Meth)acrylatklebstoff (1) durch chemische Radikalerzeugung aushärtet.

6. Klebverbund (6) nach einem der vorhergehenden Ansprüche, **dadurch gekennzeichnet, dass** die Halterung (3) eine punktförmige Halterung ist.

7. Klebverbund (6) nach einem der vorhergehenden Ansprüche, **dadurch gekennzeichnet, dass** die Halterung (3) aus Stahl, vorzugsweise aus Edelstahl ist.

8. Klebverbund (6) nach einem der vorhergehenden Ansprüche, **dadurch gekennzeichnet, dass** der Silicondichtstoff (2) mindestens ein Polydiorganosiloxan sowie mindestens ein Vernetzungsmittel umfasst.

9. Klebverbund (6) nach Anspruch 8, **dadurch gekennzeichnet, dass** das Polydiorganosiloxan ein a,w-Dihydroxypolydimethylsiloxan und das Vernetzungsmittel ein Alkoxysilan ist.

10. Klebverbund (6) nach einem der vorhergehenden Ansprüche, **dadurch gekennzeichnet, dass** der Querschnitt des Kleb- und Dichtstoffs parallel zur Scheibenoberfläche kreisförmig ist.

11. Klebverbund (6) nach einem der vorhergehenden Ansprüche, **dadurch gekennzeichnet, dass** die Scheibe (4) aus Glas ist.

12. Klebverbund (6) nach einem der vorhergehenden Ansprüche, **dadurch gekennzeichnet, dass** die Dicke des Klebstoffs zwischen der Scheibe (4) und der metallischen Halterung (3) weniger als 1 cm beträgt.

13. Verwendung eines Klebverbunds (6) nach einem der vorhergehenden Ansprüche zum Befestigen einer Scheibe (4) an einer Tragkonstruktion (5).

14. Verfahren zum Befestigen einer metallischen Halterung (3) an einer Scheibe (2) umfassend die Schritte
a) Applikation eines (Meth)acrylatklebstoffs (1) auf die Scheibe (4) und/oder die metallische Halterung (3), und Kontaktieren des (Meth)acrylatklebstoffs (1) mit der Scheibe (4) und/oder der metallischen Halterung (3), oder
a') Applikation eines (Meth)acrylatklebstoffs (1) zwischen die Scheibe (4) und die metallische Halterung (3), und
b) Applikation eines Silicondichtstoffs (2) um den (Meth)acrylatklebstoff (1).

15. Artikel umfassend mindestens einen Klebverbund (6) nach einem der Ansprüche 1 bis 12.

16. Artikel nach Anspruch 15, **dadurch gekennzeichnet, dass** der Artikel ein Bauwerk, ein Industriegut oder ein Transportmittel, insbesondere ein Gebäude, oder ein Teil davon, ist.
